# EUROPEAN PATENT APPLICATION

(11) **EP 4 461 429 A1**
(43) Date of publication of application: **13.11.2024**
(21) Application number: 23892759.4
(22) Date of filing: 25.12.2023
(51) Int. Cl.: B21C 37/04, C22F 1/05, C22C 1/02, C22C 21/02, C22C 21/08, C21D 9/52, B21B 1/16, B21B 1/46, B21C 1/02, H01B 13/00, H01B 9/00

(54) **MEDIUM-STRENGTH AND HIGH-CONDUCTIVITY ALUMINUM ALLOY MONOFILAMENT PRODUCTION PROCESS AND ALUMINUM ALLOY MONOFILAMENT PRODUCED THEREBY**

(30) Priority: 28.03.2023 CN 202310309225
(71) Applicant: Jiangsu Zhongtian Technology Co., Ltd., Nantong, Jiangsu 226463 (CN)
(72) Inventor: MIAO, Yaojun, Nantong, Jiangsu 226463 (CN); BAI, Qingling, Nantong, Jiangsu 226463 (CN); ZHOU, Feng, Nantong, Jiangsu 226463 (CN); XUE, Chi, Nantong, Jiangsu 226463 (CN); XU, Haibo, Nantong, Jiangsu 226463 (CN); SHAN, Xiaolong, Nantong, Jiangsu 226463 (CN); WANG, Xinyu, Nantong, Jiangsu 226463 (CN); HONG, Xiaohong, Nantong, Jiangsu 226463 (CN); MIAO, Xiaolin, Nantong, Jiangsu 226463 (CN)
(74) Representative: Rooney, John-Paul
(86) International application number: PCT/CN2023/141425
(87) International publication number: WO 2024/198562

(57) **Abstract**

The present disclosure provides a production process of a medium-strength high-conductivity aluminum alloy monofilament and an aluminum alloy monofilament thereof, and relates to the technical field of aluminum alloy materials. The production process comprises the following steps: providing an aluminum alloy rod; drawing the aluminum alloy rod to obtain alloy monofilaments, and performing pre-aging treatment on the alloy monofilaments at 100 to 150°C during the drawing process; and performing artificial aging treatment on the alloy monofilaments to obtain the medium-strength high-conductivity aluminum alloy monofilaments. The present disclosure further provides an aluminum alloy monofilament. The aluminum alloy monofilament obtained through the production process of the medium-strength high-conductivity aluminum alloy monofilament provided in the present disclosure has a strength higher than or equal to 270 MPa, an electrical conductivity higher than or equal to 59% IACS, and an elongation greater than or equal to 5%.

## Description

### Technical Field

The present disclosure relates to the technical field of aluminum alloy materials, in particular to a production process of medium-strength high-conductivity aluminum alloy monofilament and an aluminum alloy monofilament thereof.

### Background Art

Overhead power transmission lines are energy arteries for national economic development. In China, the overhead power transmission lines are mainly composed of ordinary steel-reinforced aluminum stranded wires, which lead to high power loss. Recently, a schedule for peak carbon dioxide emissions and carbon neutrality has been put forward in China. Using energy-saving wires instead of steel-reinforced aluminum stranded wires to greatly reduce the power loss of power transmission lines has become an important development trend in the field of overhead power transmission. At present, the strengths of high-conductivity aluminum alloys having electrical conductivity of 58.5% IACS in China are only 230 to 250 MPa, and the tensile strengths of wires made of such aluminum alloys are inadequate. It is well known that the strength and electrical conductivity of Al-Mg-Si alloys are inter-inhibitive. As the strength is increased, the electrical conductivity is usually decreased apparently, and it is difficult to achieve a significant improvement in the overall performance of Al-Mg-Si alloys through conventional processes. Therefore, it is urgent to develop a novel aluminum alloy monofilament production process that can improve the strength and elongation of aluminum alloy monofilaments while maintaining the high electrical conductivity of aluminum alloy monofilaments.

### Summary of the Invention

An object of the present application is to provide a production process of medium-strength high-conductivity aluminum alloy monofilament, which can improve the strength and elongation of aluminum alloy monofilaments while maintaining the high electrical conductivity of aluminum alloy monofilaments.

Another object of the present application is to provide an aluminum alloy monofilament having a strength higher than or equal to 270 MPa, an electrical conductivity higher than or equal to 59% IACS, and an elongation greater than or equal to 5%.

In a first aspect, the present disclosure provides a production process of medium-strength high-conductivity aluminum alloy monofilament, which comprises the following steps:
providing an aluminum alloy rod;
drawing the aluminum alloy rod to obtain alloy monofilaments, and performing pre-aging treatment on the alloy monofilaments at 100 to 150°C during the drawing process; and
performing artificial aging treatment on the alloy monofilaments to obtain medium-strength high-conductivity aluminum alloy monofilaments; wherein the temperature of the pre-aging treatment is lower than the temperature of the artificial aging treatment.

Furthermore, in some embodiments of the present application, the pre-aging treatment comprises:
in the drawing process, heating a last wire-drawing die and/or wire storage area to perform pre-aging treatment on the alloy monofilaments at 100 to 150°C.

Furthermore, in some embodiments of the present application, the artificial aging treatment comprises:
performing aging treatment on the alloy monofilaments at 140 to 160°C for 5 to 10 hours.

Furthermore, in some embodiments of the present application, the step of providing an aluminum alloy rod comprises: performing solid solution treatment on the aluminum alloy rod;
the solid solution treatment comprises:
holding an aluminum alloy rod obtained through casting and rolling at 480 to 530°C for 1 to 3 hours, quenching the aluminum alloy rod, and cooling the aluminum alloy rod to 50 to 120°C.

Furthermore, in some embodiments of the present application, the aluminum alloy rod obtained through casting and rolling is prepared through the following steps:
S11. Smelting alloy: providing raw materials according to the element components of the aluminum alloy rod, and melting the raw material to obtain a melt;
S12. Refining in a furnace: boronizing the melt, refining the melt at 740 to 750°C, removing the slag, and standing still the melt;
S13. In-line refining: performing in-line degassing and filtering on the aluminum melt after the casting is commenced, to obtain refined molten aluminum;
S14. Grain refinement: adding a refiner in 0.05-0.15% mass fractions into the refined molten aluminum;
S15. Continuous casting and rolling: casting and rolling the in-line refined aluminum melt through a continuous casting and rolling process to obtain the aluminum alloy rod.

Furthermore, in some embodiments of the present application, in the step S12, the refining duration is 10 to 15 minutes; and/or
the standing duration is 30 to 40 minutes; and/or
the standing temperature is 720 to 730°C.

Furthermore, in some embodiments of the present application, the continuous casting and rolling comprises: continuously casting the in-line refined melt at 700 to 720°C with a wheel crystallizer to obtain a casting blank; and rolling the casting blank at 490 to 510°C with a continuous rolling mill group to obtain the aluminum alloy rod.

Furthermore, in some embodiments of the present application, the in-line refining comprises:
performing in-line degassing by rotary blowing at a rotating speed of 400 to 500 r/min. with nitrogen, and performing in-line filtration with a filter plate having porosity of 30/50 PPI.

Furthermore, in some embodiments of the present application, measured in mass fractions, element components of the aluminum alloy rod include Mg in 0.3-0.45% fractions, Si in 0.3-0.5% fractions, Fe in 0.1-0.15% fractions, Y in 0.1-0.3% fractions, La in 0.01-0.05% fractions, B in 0.001-0.05% fractions, and Al and other inevitable impurity elements in the remaining fractions; and the total fractions of the inevitable impurity elements are smaller than or equal to 0.02%.

In a second aspect, the present application further provides a medium-strength high-conductivity aluminum alloy monofilament, wherein, measured in mass fractions, element components of the aluminum alloy monofilament include Mg in 0.3-0.45% fractions, Si in 0.3-0.5% fractions, Fe in 0.1-0.15% fractions, Y in 0.1-0.3% fractions, La in 0.01-0.05% fractions, B in 0.001-0.05% fractions, and Al and other inevitable impurity elements in the remaining fractions; and the total fractions of the inevitable impurity elements are smaller than or equal to 0.02%.

Furthermore, in some embodiments of the present application, the aluminum alloy monofilament has a strength higher than or equal to 270 MPa, an electrical conductivity higher than or equal to 59% IACS, and an elongation greater than or equal to 5%.

In existing medium-strength aluminum alloy monofilament production methods, usually an aluminum melt is obtained through smelting, then an aluminum alloy rod is obtained through a continuous casting and rolling process, finally the aluminum alloy rod is drawn and then subjected to aging treatment to strengthen the aluminum alloy monofilaments obtained through drawing and improve the strength of the aluminum alloy monofilaments. In the process of preparing an aluminum alloy rod through continuous casting and rolling, especially in the process of rolling a casting blank to obtain an aluminum alloy rod, the alloy elements can't be fully dissolved owing to significant temperature drop; consequently, a strengthening effect resulted from the dispersion and precipitation of the alloy elements can't be fully achieved in the subsequent aging treatment, further improvement of the properties of the alloy is limited, and it is difficult to further improve the strength and elongation of the obtained aluminum alloy monofilaments when the electrical conductivity of the aluminum alloy monofilaments reaches 58.5%, resulting in an inadequate tensile strength; however, if the strength and elongation are slightly improved by high-temperature aging, it is difficult to further increase the electrical conductivity of the aluminum alloy monofilaments from 58.5%.

The present application attains the following beneficial effects:
In the production process of the aluminum alloy monofilament provided in the present application, solid solution and quenching treatments are performed on the aluminum alloy rod, so that the precipitated Mg and Si elements are completely dissolved back into the aluminum matrix to a supersaturated state, which provides conditions for maximizing the dispersion strengthening effect during subsequent aging strengthening; pre-aging treatment is performed in drawing process of the aluminum alloy monofilament, and the stress applied during the drawing of the aluminum alloy rod provides a driving force for rapid diffusion and precipitation of the alloy atoms, to prepare for the precipitation of a second phase in the aluminum alloy monofilaments and promote the rapid and effective precipitation of strengthening phases in the aluminum alloy monofilaments in the artificial aging treatment stage; performing the artificial aging treatment after the drawing process can drive the Mg and Si elements in the aluminum alloy monofilaments in a solid solution state to precipitate more fully in the form of a metastable strengthening phase; thus, the strength and conductivity of the monofilaments are optimized, the strength, electrical conductivity and elongation of the obtained aluminum alloy monofilaments are improved, and the aluminum alloy monofilaments have excellent tensile strength as well as high electric conductivity.

The present application further provides a medium-strength high-conductivity aluminum alloy monofilament having a strength higher than or equal to 270 MPa, an electrical conductivity higher than or equal to 59% IACS, and an elongation greater than or equal to 5%.

### Embodiments

The technical solution of the present application will be detailed clearly and fully below in embodiments. Obviously, the embodiments described herein are only some embodiments of the present application, but not all possible embodiments of the present application. All other embodiments obtained by those having ordinary skill in the art based on the embodiments provided herein without expending any creative labor shall be deemed as falling in the scope of protection of the present application.

The technical solution in the present disclosure will be detailed clearly and fully below in embodiments. Obviously, the embodiments described herein are only some embodiments of the present disclosure, but not all possible embodiments of the present disclosure. All other embodiments obtained by those having ordinary skills in the art on the basis of the embodiments described herein without expending any creative labor shall be deemed as falling in the scope of protection of the present disclosure.

In the description of the present application, it should be understood that "a plurality" means two or more, unless otherwise specified explicitly.

The following disclosure provides many different embodiments or examples to implement different structures in the present application. In order to simplify the disclosure of the present application, components and arrangements of specific examples will be described below. Of course, the examples are only exemplary, and are not intended to limit the present application. In addition, reference numerals and/or reference letters may be used repeatedly in different examples in the present application, and such repetition is for the purpose of simplicity and clarity, and does not in itself indicate the relationship between the various embodiments and/or arrangements discussed herein. In addition, the present application provides examples of various specific materials, but those having ordinary skills in the art can readily appreciate that other processes and/or other materials may be used.

The present application provides a production process of a medium-strength high-conductivity aluminum alloy monofilament, which comprises the following steps:
providing an aluminum alloy rod;
drawing the aluminum alloy rod to obtain alloy monofilaments, and performing pre-aging treatment on the alloy monofilaments at 100 to 150°C during the drawing process; and
performing artificial aging treatment on the alloy monofilaments to obtain medium-strength high-conductivity aluminum alloy monofilaments.

In some embodiments, measured in mass fractions, element components of the aluminum alloy rod include Mg (Magnesium) in 0.3-0.45% fractions, Si (Silicon) in 0.3-0.5% fractions, Fe (Ferrum) in 0.1-0.15% fractions, Y (Yttrium) in 0.1-0.3% fractions, La (Lanthanum) in 0.01-0.05% fractions, B (Boron) in 0.001-0.05% fractions, and Al (Aluminum) and other inevitable impurity elements in the remaining fractions; and the total fractions of the inevitable impurity elements are smaller than or equal to 0.02%.

It should be noted that the "performing pre-aging treatment on the alloy monofilaments at 100 to 150°C during the drawing process" mentioned in the present application should be understood as: in the drawing process, the alloy monofilaments formed by drawing are aged at 100 to 150°C.

In some embodiments, the content of each element in the inevitable impurity elements is lower than or equal to 0.005%.

It should be noted that the inevitable impurity elements are elements that inevitably exist in the raw materials used in the preparation of the aluminum alloy rod and/or elements that inevitably enter the aluminum alloy rod during the preparation of the aluminum alloy rod, such as hydrogen, oxygen, nitrogen, manganese and zinc.

In some embodiments, the pre-aging treatment comprises:
in the drawing process, performing pre-aging treatment on the alloy monofilaments at 100 to 150°C in a last wire-drawing die and/or wire storage area.

In some embodiments, the artificial aging treatment comprises:
performing aging treatment on the alloy monofilaments at 140 to 160°C for 5 to 10 hours.

In the present application, pre-aging treatment is performed in the drawing process of aluminum alloy monofilament, and the stress applied by drawing the rod provides a driving force for rapid diffusion and precipitation of the atoms; the pre-aging treatment makes preparation for the precipitation of a second phase, promotes rapid and effective precipitation of the second phase in the artificial aging stage, and realizes optimization of the strength and electrical conductivity of monofilaments. It should be noted that the temperature of the pre-aging treatment should be lower than the temperature of the artificial aging treatment, and the temperature of the pre-aging treatment should not be higher than 150°C. In the alloy preparation process, as the temperature rises, Mg and Si elements in the alloy gradually form GP regions and β" and β' phases from the dissolved mass; wherein the GP regions are usually formed by precipitation at a low temperature, and can maintain a coherent relationship with Al, and the crystal phase of the GP regions will gradually change into the β' phase as the temperature rises gradually. Therefore, in the present application, in the pre-aging treatment stage, a low pre-aging treatment temperature is used to make Mg and Si elements precipitate to form GP regions as crystal nuclei first, and then in the artificial aging stage, the Mg and Si elements grow β" and β' phase alloys by using the GP regions as cores, thereby the strength, electrical conductivity and elongation of the aluminum alloy monofilaments are improved.

In the present application, the pre-aging treatment and the artificial aging treatment are not two separate aging treatments. The pre-aging treatment is a pretreatment for the artificial aging treatment, to promote rapid precipitation of the crystal phases in the artificial aging treatment and improve the electrical conductivity of the alloy. Besides, in the pre-aging treatment process, the pre-aging treatment and the drawing process must be performed at the same time, and the stress in the drawing process is used to provide a driving force for rapid diffusion and precipitation of the atoms of the alloy, so that several GP regions can be formed uniformly as crystal nuclei during the pre-aging treatment to make preparation for the precipitation of crystal phases in the artificial aging treatment.

In some embodiments, the step of providing an aluminum alloy rod comprises: performing solid solution treatment on the aluminum alloy rod;
the solid solution treatment comprises:
holding an aluminum alloy rod obtained through casting and rolling at 480 to 530°C for 1 to 3 hours, quenching the aluminum alloy rod, and cooling the aluminum alloy rod to 50 to 120°C.

Owing to the significant temperature drop of the aluminum alloy in the continuous casting and rolling process, a large amount of alloy elements has been precipitated from the matrix, which is not conducive to subsequent aging strengthening of the aluminum alloy monofilaments. Therefore, after the aluminum alloy rod is obtained through casting and rolling, the aluminum alloy rod is treated by solid solution and quenching, so that the precipitated Mg and Si elements are completely dissolved back into the aluminum matrix to a supersaturated state to provide optimal conditions for aging strengthening and maximize the dispersion strengthening effect of Mg and Si alloy elements.

In some embodiments, the aluminum alloy rod obtained through casting and rolling is prepared through the following steps:
S11. Smelting alloy: providing raw materials according to the element components of the aluminum alloy rod, and melting the raw material to obtain a melt;
S12. Refining in a furnace: boronizing the melt, refining the melt at 740 to 750°C, removing the slag, and standing still the melt;
S13. In-line refining: performing in-line degassing and filtering on the aluminum melt after the casting is commenced to obtain refined molten aluminum;
S14. Grain refinement: adding a refiner in 0.05-0.15% mass fractions into the refined molten aluminum;
S15. Continuous casting and rolling: casting and rolling the in-line refined aluminum melt through a continuous casting and rolling process to obtain the aluminum alloy rod.

In some embodiments, in the alloy smelting process, the raw materials providing aluminum, silicon, yttrium, Ferrum, lanthanum and boron are loaded into the smelting furnace first for melting, and then the raw materials providing magnesium are loaded into the smelting furnace for melting and mixing.

In some embodiments, in the alloy smelting process, the melt is sampled and analyzed, and the composition ratio of the melt is adjusted according to the result of analysis so that the composition ratio of the obtained aluminum alloy rod can meet the requirements.

In some embodiments, one of the raw materials for providing aluminum is aluminum ingots having a purity not lower than 99.7%. Rare earth elements are provided by means of master alloys.

In some embodiments, in the step S12, the refining duration is 10 to 15 minutes; and/or
the standing duration is 30 to 40 minutes; and/or
the standing temperature is 720 to 730°C.

In some embodiments, the step S12 is performed in a tilting holding furnace, and specifically comprises:
transferring the melt to a tilting holding furnace, adding raw materials providing boron for boronation, stirring the melt, adjusting the temperature of the melt to 740 to 750°C and refining in the furnace for 10 to 15 minutes, then thoroughly removing the surface slag, and adjusting the temperature to 720 to 730°C and holding still for 30 to 40 minutes.

In some embodiments, the refiner is Al-Ti-B rods, and the grains in the refined molten aluminum are refined by using the Al-Ti-B rods.

In some embodiments, the refiner is inline added when the refined molten aluminum flows through the trough.

In some embodiments, the continuous casting and rolling comprises: continuously casting the in-line refined melt at 700 to 720°C with a wheel crystallizer to obtain a casting blank; and rolling the casting blank at 490 to 510°C with a continuous rolling mill group to obtain the aluminum alloy rod.

In some embodiments, the in-line refining comprises:
performing in-line degassing by rotary blowing at a rotating speed of 400 to 500 r/min. with nitrogen, and performing in-line filtration with a filter plate having porosity of 30/50 PPI.

The present application further provides a medium-strength high-conductivity aluminum alloy monofilament, wherein, measured in mass fractions, element components of the aluminum alloy monofilament include Mg in 0.3-0.45% fractions, Si in 0.3-0.5% fractions, Fe in 0.1-0.15% fractions, Y in 0.1-0.3% fractions, La in 0.01-0.05% fractions, B in 0.001-0.05% fractions, and Al and other inevitable impurity elements in the remaining fractions; and the total fractions of the inevitable impurity elements are smaller than or equal to 0.02%.

The aluminum alloy monofilament has a strength higher than or equal to 270 MPa, an electrical conductivity higher than or equal to 59% IACS, and an elongation greater than or equal to 5%.

In the present application, Y (Yttrium) is added in the aluminum alloy monofilaments, and the rare earth element Y can form a FeYSiAl phase with impurity Fe, thereby the solid solubility of impurity elements in aluminum can be decreased and the electrical conductivity of the alloy can be improved. It can also form an Al₃Y phase with the Al matrix, thereby the mechanical properties of the alloy can be improved.

In order to make the above implementation details and operations of the present application understood clearly by those skill in the art and fully reveal the improved performance of the production process of the medium-strength high-conductivity aluminum alloy monofilament and the preparation method provided in the embodiments of the present application, the above technical solution will be explained in several examples below.

### Example 1

S11: Aluminum ingots having a purity higher than 99.7%, an Al-Si alloy and an Al-RE alloy are loaded into a smelting furnace to be heated and melted, a certain amount of magnesium ingots are added into the molten aluminum to be melted while stirring. The molten aluminum is stirred extensively to a homogenous state, samples are taken for spectral analysis, and the composition of the melt is controlled within a specified range.

S12: The molten aluminum is transferred into a tilting holding furnace, a small amount of Al-B alloy is added for boronation, and an electromagnetic stirring device at the bottom of the furnace is started to extensively stir the melt. The temperature of the melt is adjusted to 740°C for refining treatment for 10 minutes, then surface slag is removed, the temperature is adjusted to 720°C, and the melt is kept still for 40 minutes.

S13: After the casting is commenced, the melt is degassed and filtered inline; specifically, a rotary blowing degassing box is used for the in-line degassing, and high-purity nitrogen is used as a degassing medium; a two-stage foam ceramic filter plate having porosity of 30/50 PPI is used for the in-line filtration.

S14: When the molten aluminum flows through a trough, an Al-Ti-B refiner is added inline in an amount of 0.1% for grain refinement.

S15: Continuous casting is carried out with a wheel crystallizer, and a rolling process of the casting blank is carried out in a 15-stand three-high mill at 500°C rolling temperature, an aluminum alloy rod in diameter of 9.5 mm is obtained through the rolling, and the rod is cooled inline and then collected.

S16: The alloy rod is treated for solid solution, the heating temperature of solid solution is 500°C, and the holding duration is 2 hours; then, the rod is quenched and cooled to rapidly cool the rod to below 70°C.

S17: The rod is drawn on a sliding wire-drawing machine, and the monofilaments are pre-aged at 130°C while being drawn; after the drawing, monofilaments in diameter of 3.5 mm are obtained.

S18: The drawn alloy monofilaments are aged to obtain aluminum alloy monofilaments with the aging process of 150°C for 9 hours.

Through analysis and detection, it is determined that the alloy components in this example are as follows: Mg in 0.38% fractions, Si in 0.42% fractions, Fe in 0.14% fractions, Y in 0.2% fractions, La in 0.03% fractions, B in 0.004% fractions, the content of each inevitable impurity element is lower than or equal to 0.005%, and the total content of inevitable impurity elements is lower than or equal to 0.02%. The obtained monofilament has a strength of 288 MPa and an electrical conductivity of 59.3% IACS.

### Example 2

S11: Aluminum ingots having a purity higher than 99.7%, an Al-Si alloy and an Al-RE alloy are loaded into a smelting furnace to be heated and melted, a certain amount of magnesium ingots is added into the molten aluminum to be melted while stirring. The molten aluminum is stirred extensively to a homogenous state, samples are taken for spectral analysis, and the composition of the melt is controlled within a specified range.

S12: The molten aluminum is transferred into a tilting holding furnace, a small amount of Al-B alloy is added for boronation, and an electromagnetic stirring device at the bottom of the furnace is started to extensively stir the melt. The temperature of the melt is adjusted to 745°C for refining treatment for 10 minutes, then surface slag is removed, the temperature is adjusted to 720°C, and the melt is kept still for 40 minutes.

S13: After the casting is commenced, the melt is degassed and filtered inline; specifically, a rotary blowing degassing box is used for the in-line degassing, and high-purity nitrogen is used as a degassing medium; a two-stage foam ceramic filter plate having porosity of 30/50 PPI is used for the in-line filtration.

S14: When the molten aluminum flows through a trough, an Al-Ti-B refiner is added inline in an amount of 0.08% for grain refinement.

S15: Continuous casting is carried out with a wheel crystallizer, and a rolling process of the casting blank is carried out in a 15-stand three-high mill at 505°C rolling temperature, an aluminum alloy rod in diameter of 9.5 mm is obtained through the rolling, and the rod is cooled inline and then collected.

S16: The alloy rod is treated for solid solution, the heating temperature of solid solution is 490°C, and the holding duration is 2 hours; then, the rod is quenched and cooled to rapidly cool the rod to below 70°C.

S17: The rod is drawn on a sliding wire-drawing machine, and the monofilaments are pre-aged at 120°C while being drawn; after the drawing, monofilaments in diameter of 3.8 mm are obtained.

S18: The drawn alloy monofilaments are aged to obtain aluminum alloy monofilaments with aging process of 150°C for 8 hours.

Through analysis and detection, it is determined that the alloy components in this example are as follows: Mg in 0.33% fractions, Si in 0.32% fractions, Fe in 0.15% fractions, Y in 0.2% fractions, La in 0.02% fractions, B in 0.015% fractions, the content of each inevitable impurity element is lower than or equal to 0.005%, and the total content of inevitable impurity elements is lower than or equal to 0.02%. The obtained monofilament has a strength of 275 MPa and an electrical conductivity of 59.8% IACS.

### Comparative Example 1

S11: Aluminum ingots having a purity higher than 99.7%, an Al-Si alloy and an Al-RE alloy are loaded into a smelting furnace to be heated and melted, a certain amount of magnesium ingots is added into the molten aluminum to be melted while stirring. The molten aluminum is stirred extensively to a homogenous state, samples are taken for spectral analysis, and the composition of the melt is controlled within a specified range.

S12: The molten aluminum is transferred into a tilting holding furnace, a small amount of Al-B alloy is added for boronation, and an electromagnetic stirring device at the bottom of the furnace is started to extensively stir the melt. The temperature of the melt is adjusted to 740°C for refining treatment for 10 minutes, then surface slag is removed, the temperature is adjusted to 720°C, and the melt is kept still for 40 minutes.

S13: After the casting is commenced, the melt is degassed and filtered inline; specifically, a rotary blowing degassing box is used for the in-line degassing, and high-purity nitrogen is used as a degassing medium; a two-stage foam ceramic filter plate having porosity of 30/50 PPI is used for the in-line filtration.

S14: When the molten aluminum flows through a trough, an Al-Ti-B refiner is added inline in an amount of 0.12% for grain refinement.

S15: Continuous casting is carried out with a wheel crystallizer, and a rolling process of the casting blank is carried out in a 15-stand three-high mill at 500°C rolling temperature, an aluminum alloy rod in diameter of 9.5 mm is obtained through the rolling, and the rod is cooled and quenched inline and then collected.

S16: The rod is drawn on a sliding wire-drawing machine, and monofilaments in diameter of 3.5 mm are obtained after the drawing.

S17: The drawn alloy monofilaments are aged with aging process of 160°C for 8 hours.

Through analysis and detection, it is determined that the alloy components in this comparative example are as follows: Mg in 0.47% fractions, Si in 0.45% fractions, Fe in 0.15% fractions, Y in 0.1% fractions, La in 0.02% fractions, and B in 0.005% fractions. The obtained monofilament has a strength of 276 MPa and an electrical conductivity of 58.2% IACS.

### Comparative Example 2

S11: Aluminum ingots having a purity higher than 99.7%, an Al-Si alloy and an Al-RE alloy are loaded into a smelting furnace to be heated and melted, a certain amount of magnesium ingots is added into the molten aluminum to be melted while stirring. The molten aluminum is stirred extensively to a homogenous state, samples are taken for spectral analysis, and the composition of the melt is controlled within a specified range.

S12: The molten aluminum is transferred into a tilting holding furnace, a small amount of Al-B alloy is added for boronation, and an electromagnetic stirring device at the bottom of the furnace is started to extensively stir the melt. The temperature of the melt is adjusted to 740°C for refining treatment for 10 minutes, then surface slag is removed, the temperature is adjusted to 730°C, and the melt is kept still for 40 minutes.

S13: After the casting is commenced, the melt is degassed and filtered inline; specifically, a rotary blowing degassing box is used for the in-line degassing, and high-purity nitrogen is used as a degassing medium; a two-stage foam ceramic filter plate having porosity of 30/50 PPI is used for the in-line filtration.

S14: When the molten aluminum flows through a trough, an Al-Ti-B refiner is added inline in an amount of 0.08% for grain refinement.

S15: Continuous casting is carried out with a wheel crystallizer, and a rolling process of the casting blank is carried out in a 15-stand three-high mill at 500°C rolling temperature, an aluminum alloy rod in diameter of 9.5 mm is obtained through the rolling, and the rod is cooled and quenched inline and then collected.

S16: The rod is drawn on a sliding wire-drawing machine, and monofilaments in diameter of 3.7 mm are obtained after the drawing.

S17: The drawn alloy monofilaments are aged with aging process of 155°C for 7 hours.

Through analysis and detection, it is determined that the alloy components in this comparative example are as follows: Mg in 0.37% fractions, Si in 0.31% fractions, Fe in 0.13% fractions, La in 0.01% fractions, and B in 0.004% fractions. The obtained monofilament has a strength of 258 MPa and an electrical conductivity of 58.7% IACS.

### Comparative Example 3

S11: Aluminum ingots having a purity higher than 99.7%, an Al-Si alloy and an Al-RE alloy are loaded into a smelting furnace to be heated and melted, a certain amount of magnesium ingots is added into the molten aluminum to be melted while stirring. The molten aluminum is stirred extensively to a homogenous state, samples are taken for spectral analysis, and the composition of the melt is controlled within a specified range.

S12: The molten aluminum is transferred into a tilting holding furnace, a small amount of Al-B alloy is added for boronation, and an electromagnetic stirring device at the bottom of the furnace is started to extensively stir the melt. The temperature of the melt is adjusted to 740°C for refining treatment for 10 minutes, then surface slag is removed, the temperature is adjusted to 730°C, and the melt is kept still for 40 minutes.

S13: After the casting is commenced, the melt is degassed and filtered inline; specifically, a rotary blowing degassing box is used for the in-line degassing, and high-purity nitrogen is used as a degassing medium; a two-stage foam ceramic filter plate having porosity of 30/50 PPI is used for the in-line filtration.

S14: When the molten aluminum flows through a trough, an Al-Ti-B refiner is added inline in an amount of 0.08% for grain refinement.

S15: Continuous casting is carried out with a wheel crystallizer, and a rolling process of the casting blank is carried out in a 15-stand three-high mill at 500°C rolling temperature, an aluminum alloy rod in diameter of 9.5 mm is obtained through the rolling, and the rod is cooled and quenched inline and then collected.

S16: The rod is drawn on a sliding wire-drawing machine, and the monofilaments are aged at 170°C while being drawn; after the drawing, monofilaments in diameter of 3.7 mm are obtained.

S17: The drawn alloy monofilaments are aged with aging process of 120°C for 7 hours.

Through analysis and detection, it is determined that the alloy components in this comparative example are as follows: Mg in 0.4% fractions, Si in 0.38% fractions, Fe in 0.15% fractions, La in 0.015% fractions, and B in 0.005% fractions. The obtained monofilament has a strength of 246 MPa and an electrical conductivity of 56.3% IACS.

Finally, it should be noted: the above embodiments are intended only to interpret the technical solution of the present application, but don't constitute any limitation on the present application; while the present application is described in detail above in some embodiments, those having ordinary skills in the art can readily understand that various modifications can be made to the technical solutions described in the above embodiments or equivalent replacements may be made to all or a part of the technical features therein; however, such modifications or replacements do not make the essence of the corresponding technical solutions deviate from the scope of the technical solutions in the embodiments of the present application.

## Claims

1. A production process of a medium-strength high-conductivity aluminum alloy monofilament, comprising:
providing an aluminum alloy rod;
drawing the aluminum alloy rod to obtain alloy monofilaments, and performing pre-aging treatment on the alloy monofilaments at 100 to 150°C during the drawing process; and
performing artificial aging treatment on the alloy monofilaments to obtain the medium-strength high-conductivity aluminum alloy monofilaments; wherein the temperature of the pre-aging treatment is lower than the temperature of the artificial aging treatment.

2. The production process of the medium-strength high-conductivity aluminum alloy monofilament according to claim 1, **characterized in that** the pre-aging treatment comprises:
in the drawing process, heating a last wire-drawing die and/or wire storage area to perform pre-aging treatment on the alloy monofilaments at 100 to 150°C.

3. The production process of the medium-strength high-conductivity aluminum alloy monofilament according to claim 1, **characterized in that** the artificial aging treatment comprises:
performing aging treatment on the alloy monofilaments at 140 to 160°C for 5 to 10 hours.

4. The production process of the medium-strength high-conductivity aluminum alloy monofilament according to claim 1, **characterized in that** the process of providing an aluminum alloy rod comprises: performing solid solution treatment on the aluminum alloy rod;
the solid solution treatment comprises:
holding an aluminum alloy rod obtained through casting and rolling at 480 to 530°C for 1 to 3 hours, quenching the aluminum alloy rod, and cooling the aluminum alloy rod to 50 to 120°C.

5. The production process of the medium-strength high-conductivity aluminum alloy monofilament according to claim 4, **characterized in that** the aluminum alloy rod obtained through casting and rolling is prepared through the following steps:
S11. Smelting alloy: providing raw materials according to the element components of the aluminum alloy rod, and melting the raw material to obtain a melt;
S12. Refining in a furnace: boronizing the melt, refining the melt at 740 to 750°C, removing the slag, and standing still the melt;
S13. In-line refining: performing in-line degassing and filtering on the aluminum melt after the casting is commenced to obtain refined molten aluminum;
S14. Grain refinement: adding a refiner in 0.05-0.15% mass fractions into the refined molten aluminum;
S15. Continuous casting and rolling: casting and rolling the in-line refined aluminum melt through a continuous casting and rolling process to obtain the aluminum alloy rod.

6. The production process of the medium-strength high-conductivity aluminum alloy monofilament according to claim 5, **characterized in that** in the step S12, the refining duration is 10 to 15 minutes; and/or
the standing duration is 30 to 40 minutes; and/or
the standing temperature is 720 to 730°C.

7. The production process of the medium-strength high-conductivity aluminum alloy monofilament according to claim 5, **characterized in that** the continuous casting and rolling comprises: continuously casting the in-line refined melt at 700 to 720°C with a wheel crystallizer to obtain a casting blank; and rolling the casting blank at 490 to 510°C with a continuous rolling mill group to obtain the aluminum alloy rod.

8. The production process of the medium-strength high-conductivity aluminum alloy monofilament according to claim 1, **characterized in that** measured in mass fractions, element components of the aluminum alloy rod include Mg in 0.3-0.45% fractions, Si in 0.3-0.5% fractions, Fe in 0.1-0.15% fractions, Y in 0.1-0.3% fractions, La in 0.01-0.05% fractions, B in 0.001-0.05% fractions, and Al and other inevitable impurity elements in the remaining fractions; and the total fractions of the inevitable impurity elements are smaller than or equal to 0.02%.

9. A medium-strength high-conductivity aluminum alloy monofilament, **characterized in that**, measured in mass fractions, element components of the aluminum alloy monofilament include Mg in 0.3-0.45% fractions, Si in 0.3-0.5% fractions, Fe in 0.1-0.15% fractions, Y in 0.1-0.3% fractions, La in 0.01-0.05% fractions, B in 0.001-0.05% fractions, and Al and other inevitable impurity elements in the remaining fractions; and the total fractions of the inevitable impurity elements are smaller than or equal to 0.02%.

10. The medium-strength high-conductivity aluminum alloy monofilament according to claim 9, **characterized in that** the aluminum alloy monofilament has a strength higher than or equal to 270 MPa, an electrical conductivity higher than or equal to 59% IACS, and an elongation greater than or equal to 5%.
